# EUROPEAN PATENT APPLICATION

(11) **EP 2 000 368 A2**
(43) Date of publication of application: **10.12.2008**
(21) Application number: 08010286.6
(22) Date of filing: 05.06.2008
(51) Int. Cl.: B60R 19/36, B60R 19/26, B60R 21/34

(54) **Impact absorbing device**

(30) Priority: 05.06.2007 JP 2007149028
(71) Applicant: NHK Spring Co.,Ltd., Yokohama-shi Kanagawa 236-0004 (JP)
(72) Inventor: Matsubara, Kousuke, Yokohama-shi Kanagawa 236-0004 (JP); Murakami, Kenji, Yokohama-shi Kanagawa 236-0004 (JP)
(74) Representative: Bohmann, Armin K.

(57) **Abstract**

An impact absorbing device which can absorb an impact, includes an exterior pipe1, an interior pipe 2, the interior pipe 2 having a base part 24, the base part 24 having one or more holes 25, and an interior pipe 2 axially slidable within the exterior pipe 1, one or more movable resistance bodies 3 arranged within the one or more holes 25 respectively, a support part 5 having a first, second and third section and movably arranged within the interior pipe 2, an interior pipe movement component 7 and a support part movement component 6 which applies an energization power to the interior pipe 2, and in a first operation mode the second section 54 faces the one or more holes 25 and in a second operation mode the third section 56 faces the one or more holes 25.

## Description

### CROSS REFERENCE TO RELATED APPLICATION

This application is based upon and claims the benefit of priority from the prior Japanese Patent Application No. 2007-149028, filed on June 5, 2007, the entire contents of which are incorporated herein by reference.

### BACKGROUND OF THE INVENTION

### FIELD OF THE INVENTION

The present invention is related to an impact absorbing device.

### DESCRIPTION OF THE RELATED ART

An automobile has traditionally been fitted with a bumper to prevent damage to the automobile body caused by a collision with a physical object. A bumper-reinforcement has been arranged to the inside of a bumper in order to increase the ability of the bumper to absorb an impact and particularly to absorb an impact from a collision with another vehicle. In addition, a variety of devices which increase impact absorption abilities are disclosed in Japanese Laid Open Patent H06-64489, Japanese Laid Open Patent H11-291845, and Japanese Laid Open Patent 2002-200949.

However, the impact absorbing devices stated above are unable to adjust impact absorption abilities. In addition, these impact absorbing devices have large installation areas and affect the overall length of the automobile. Thus, an impact absorbing device which is capable of changing impact absorption abilities between collisions with pedestrians and collisions with other vehicles and which can prevent damage to the automobile body has been requested. In addition, the impact absorbing device should preferably not affect the installation area of a bumper etc and not add to the overall length of an automobile during normal operation.

### BRIEF SUMMARY OF THE INVENTION

According to one embodiment of the present invention, an impact absorbing device is proposed which includes an exterior pipe having an exterior pipe bottom part, an exterior pipe impact absorption part which absorbs external impacts, an exterior pipe upper part and an exterior pipe connection part which connects the exterior pipe impact absorption part and the exterior pipe upper part, the exterior pipe connection part has a larger interior diameter than an interior diameter of the exterior pipe impact absorption part, wherein a boundary surface between the exterior pipe connection part and the exterior pipe impact absorption part is formed in a taper shape in a direction of the exterior pipe bottom part, an interior pipe, the interior pipe having an interior pipe bottom part, the interior pipe bottom part having a flange which projects towards the interior, an interior pipe base part having one or more holes, an interior pipe upper part, an interior pipe side surface part having a smaller exterior diameter than an exterior diameter of the interior pipe base part, the interior pipe side surface part connecting the interior pipe base part and the interior pipe upper part, wherein the interior pipe is axially slidable in the interior of the exterior pipe, one or more movable resistance bodies arranged in the one or more holes respectively, the one or more movable resistance bodies having a smaller exterior diameter than an interior diameter of the one or more holes respectively, a support part movably arranged in the interior pipe, the support part having a support part upper part, the support part upper part having a flange which projects towards the interior, the support part also having a support part side wall surface having a first section, a second section and a third section formed in this order so that the distance between each section and an interior side wall surface of the interior pipe base part becomes smaller and in a first operation mode the second section faces the one or more holes and in a second operation mode the third section faces the one or more holes, an interior pipe movement component arranged between the interior pipe upper part and the exterior pipe bottom part, the interior pipe movement component applying an energization power in order to project the interior pipe from the exterior pipe, and a support part movement component arranged between the support part upper part flange and the interior pipe bottom part flange.

According to another embodiment of the present invention, an impact absorbing device is proposed which includes an exterior pipe having an exterior pipe bottom part, a first impact absorption part which absorbs external impacts, an exterior pipe upper part and an exterior pipe connection part which connects the first impact absorption part and the exterior pipe upper part, the exterior pipe connection part having a larger interior diameter than an interior diameter of the first impact absorption part, wherein an inner periphery wall of the exterior pipe upper part and a boundary surface between the exterior pipe connection part and the first impact absorption part are formed in a taper shape in a direction of the exterior pipe bottom part, an interior pipe, the interior pipe having an interior pipe bottom part, the interior pipe bottom part having a flange which projects towards the interior, an interior pipe base part having one or more holes, an interior pipe upper part, a second impact absorption part which absorbs external impacts and having a smaller exterior diameter than an exterior diameter of the interior pipe base part, the second impact absorption part connecting the interior pipe base part and the interior pipe upper part, wherein the interior pipe is axially slidable in the interior of the exterior pipe, an exterior pipe lid part having an opening arranged on the exterior upper part, the exterior pipe lid part having a larger interior diameter than an exterior diameter of the interior pipe, one or more first resistance bodies movably arranged in the one or more holes respectively, the one or more first resistance bodies having a smaller exterior diameter than an interior diameter of the one or more holes respectively, one or more second resistance bodies movably arranged between the second impact absorption part and the inner periphery wall of the exterior pipe upper part respectively, the one or more second resistance bodies enclosed by the exterior pipe lid part, a support part movably arranged in the interior pipe, the support part having a support part upper part, the support part upper part having a flange which projects towards the interior, the support part also having a support part side wall surface having a first section, a second section and a third section formed in this order so that the distance between each section and an interior side wall surface of the interior pipe base part becomes smaller and in a first operation mode the second section faces the one or more holes and in a second operation mode the third section faces the one or more holes, and a support part movement component arranged between the support part upper part flange and the interior pipe bottom part flange.

According to another embodiment of the present invention, an impact absorbing device is proposed which includes an exterior pipe having an exterior pipe bottom part, an exterior pipe impact absorption part which absorbs external impacts, an exterior pipe upper part and an exterior pipe connection part which connects the exterior pipe impact absorption part and the exterior pipe upper part, the exterior pipe connection part having a larger interior diameter than an interior diameter of the exterior pipe impact absorption part, wherein a boundary surface between the exterior pipe connection part and the exterior pipe impact absorption part is formed in a taper shape in a direction of the exterior pipe bottom part, an interior pipe, the interior pipe having an interior pipe bottom part, the interior pipe bottom part having a flange which projects towards the interior, an interior pipe base part having one or more holes, an interior pipe impact absorption part which absorbs external impacts and having a smaller exterior diameter than an exterior diameter of the interior pipe base part, an interior pipe connection part having an even smaller exterior diameter than an exterior diameter of the interior pipe impact absorption part, the interior pipe connection part connecting the interior pipe base part and the interior pipe impact absorption part, and an interior pipe upper part connected to the interior pipe impact absorption part, wherein the interior pipe is axially slidable in the interior of the exterior pipe, one or more movable resistance bodies arranged in the one or more holes of the interior pipe respectively, the one or more movable resistance having a smaller exterior diameter than an interior diameter of the one or more holes respectively, a support part movably arranged in the interior pipe, the support part having a support part upper part, the support part upper part having a flange which projects towards the interior, the support part also having a support part side wall surface having a first section, a second section and a third section formed in this order so that the distance between each section and an interior side wall surface of the interior pipe base part becomes smaller and in a first operation mode the second section faces the one or more holes and in a second operation mode the third section faces the one or more holes, and a support part movement component arranged between the support part upper part flange and the interior pipe bottom part flange.

### BRIEF DESCRIPTION OF THE DRAWINGS

Fig. 1 is an outline structural view of an impact absorbing device related to one embodiment of the present invention.
Fig. 2 is a cutaway diagram of one part of an impact absorbing device related to one embodiment of the present invention.
Fig. 3 is an enlarged view of one part of an impact absorbing device related to one embodiment of the present invention.
Fig. 4 is an enlarged diagram of one part of an impact absorbing device related to one embodiment of the present invention in the case where an impact is applied.
Fig. 5 is cross sectional view of the direction A - A in Fig. 1 of an impact absorbing device related to embodiment one of the present invention.
Fig. 6 is a cross sectional view of an impact absorbing device related to embodiment two of the present invention.
Fig. 7 is a cross sectional view of another example of an impact absorbing device related to embodiment two of the present invention.
Fig. 8 is an external model view of a formation example of another example of an impact absorbing device related to embodiment two of the present invention.
Fig. 9 is an outline structural view of an impact absorbing device related to example one of the present invention.
Fig. 10 is an outline structural view of an impact absorbing device related to example two of the present invention.

### DETAILED DESCRIPTION OF THE INVENTION

The present invention aims to provide an impact absorbing device having a structure which is capable of easily and completely absorbing an impact and can adjust impact absorption abilities according to a collision object.

The impact absorbing device related to embodiments of the present invention will be explained in detail below while referring to the diagrams. Furthermore, the present invention is not limited to the following embodiments. In addition, the structures which are the same in each embodiment have the same symbols and their explanation may be omitted.

### (Embodiment One)

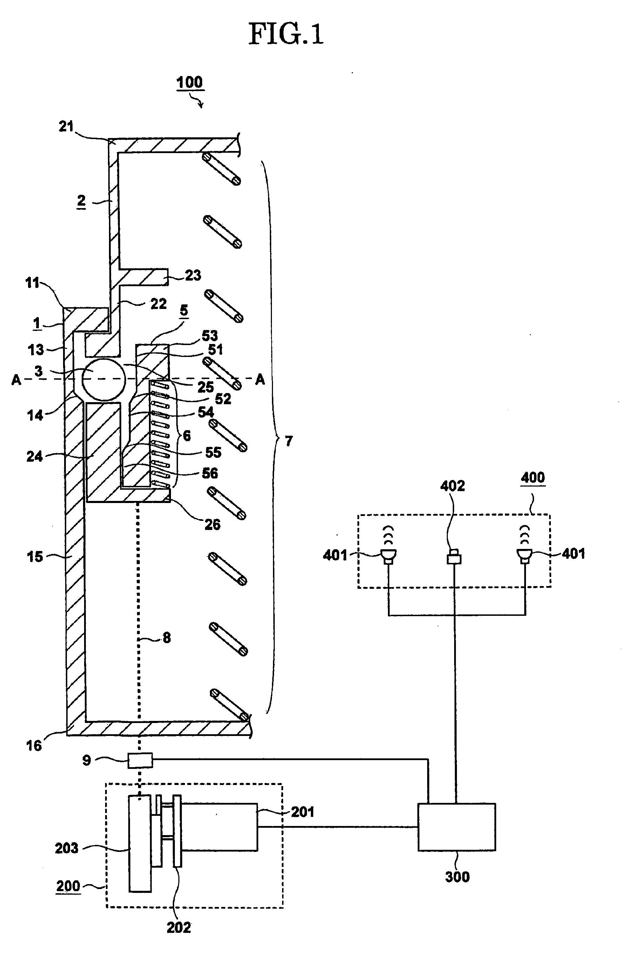

The impact absorbing device related to embodiment one of the present invention will be explained based on Fig. 1 to Fig. 5. In Fig. 1 to Fig. 5, the same parts have been given the same symbols.

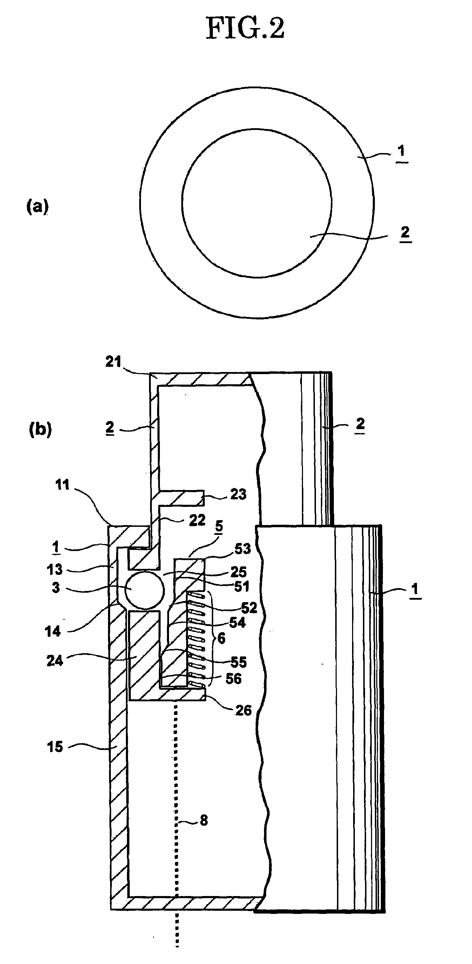

Fig. 1 is an outline structural view of an impact absorbing device related to embodiment one of the present invention. In addition, Fig. 2 is a cutaway diagram of one part of an impact absorbing device related to one embodiment of the present invention. Fig. 2(a) is a planar view diagram and 2(b) is a side view diagram and a cutaway cross sectional view of the side view diagram. Furthermore, interior pipe movement component 7 has been omitted from Fig. 2. As is shown in Fig. 1, the impact absorbing device includes an impact absorbing device body 100 and a motor unit 200. Also, the motor unit 200 is electrically connected to a controller 300. The controller 300 is also connected to a sensor device 400 which includes a radar 401 and a CCD camera 402.

The impact absorbing device body 100 related to embodiment one of the present invention includes an exterior pipe 1, an interior pipe 2, a plurality of movable resistance bodies 3, a support part 5, a support part movement component 6 (a support part sliding means for sliding the support part) and an interior pipe movement component 7 (an interior pipe sliding means for sliding the interior pipe) as is shown in Fig. 1. The whole structure of each part is as shown in Fig. 2(b). One end of a wire 8 is connected to the lower part of the support part 5 and the other end of the wire 8 is connected to the motor unit 200 via a lock mechanism 9 as shown in Fig. 1.

An upper part 11 of the exterior pipe 1 has an open shape and a bottom part 16 has a closed shape. A thick exterior pipe impact absorption part 15 which absorbs the impact force of a collision with an object and a thick layered connection part 13 (below sometimes referred to as first part) which connects this exterior pipe impact absorption part 15 and the upper part 11 is formed on a side wall part of the exterior pipe 1. The interior diameter of the exterior pipe impact absorption part 15 is smaller than the interior diameter of the connection part 13. Therefore, a boundary surface 14 (below sometimes referred to as exterior pipe first taper part) has a taper shape formed in the direction of the bottom part 16. An interior pipe 2 which can slide axially and coaxially is arranged in the interior of the exterior pipe 1 which has this shape.

The bottom part of the interior pipe 2 is open and has an interior pipe bottom part flange 26 which projects towards the interior of the interior pipe 2. However, the upper part 21 of the interior pipe 2 has a closed shape. The side wall of the interior pipe 2 is formed from an interior pipe side wall part 22 and an interior pipe base part 24 which has a larger exterior diameter than the interior pipe side wall part 22. A plurality of movable resistance body accommodation parts 25 is arranged on the side wall of the interior pipe base part 24. Each of a plurality of movable resistance bodies 3 which has a smaller exterior diameter than the diameter of each of the movable resistance body accommodation parts 25, is arranged within each of the movable resistance body accommodation parts 25 respectively. In addition, in the case where a support part 5 moves by an energization power applied by a support part movement component 6, a support part stopper 23 for stopping the movement of this support part 5, is arranged in a predetermined position on the interior periphery of the interior pipe side wall part 22. However, in the case where the support part 5 is directly fixed to the support part movement component 6 and the support part movement component 6 is directly fixed to the exterior pipe bottom part 15, the support part stopper 23 does not always need to be arranged. Furthermore, the support part 5 is arranged in a slidable state facing the interior wall of the interior pipe 2 on the interior of the interior pipe base part 24. Furthermore, in the present embodiment, a steel sphere is used as the movable resistance bodies 3 and also in the other embodiments. However, the material is not limited to steel. The sphere can be formed from a harder material than the material of the pipe which absorbs impacts.

The support part 5 includes a first section 51, a second section 54 and a third section 56 on the side wall surface. The distance between the first section 51, second section 54 and the third section 56 and the side wall surface of the interior pipe base part 24, to which the support part 5 faces, are respectively different. If the third section 56 is used as a standard, the distance between the second section 54 and the side wall surface of the interior pipe base part 24 is larger than the distance between the third section 56 and the side wall surface of the interior pipe base part 24 and the distance between the first section 51 and the side wall surface of the interior pipe base part 24 is even larger than the distance between the second section 54 and the side wall surface of the interior pipe base part 24. In the present embodiment, the connection part which connects the first section 51 and the second section 54 and the connection part which connects the second section 54 and the third section 56 both have a shape in which a cross section in a perpendicular direction is roughly an L shape and an open taper shape in the direction of the bottom part of the interior pipe. Below, these parts are respectively called a first tapered part of support part 52 and second tapered part of support part 55. In the case where the support part 5 is arranged within the interior pipe base part 24, the distance between the first section 51 of the support part 5 and the above stated side wall surface of the interior pipe base part 24 is larger than the distance between the second section 54 and the side wall surface of the interior pipe base part 24, however, both distances are formed smaller than the diameter of each of the movable resistance bodies 3. Therefore, even in the case where each of the movable resistance bodies 3 moves to the first section 51 and the second section 54, one part of each of the movable resistance bodies 3 still remains within each of the movable resistance body accommodation parts 25 of the interior pipe 2 respectively. Furthermore, the shape of the first tapered part of support part 52 and the second tapered part of support part 55 is not limited to a tapered shape. The first tapered part of support part 52 and the second tapered part of support part 55 can have a hemispherical shape arranged facing each of the movable resistance body accommodation parts 25 respectively. Furthermore, the first tapered part of support part 52 and the second tapered part of support part 55 do not need to be arranged.

The upper part of the support part 5 includes a flange (below called support part upper part flange 53) which projects towards the interior. The support part movement component 6 is arranged between the support part upper part flange 53 and the interior pipe bottom part flange 26. In the present embodiment a spring is used as the support part movement component 6. However, the support part movement component 6 is not limited to a spring. The support part movement component 6 may also be for example, a different elastomer or hydraulic cylinder. In addition, one end of the wire 8 is connected to the lower part of the support part 5. Therefore, in the case where the wire 8 is released, the support part 5 which is latched when the support part movement component 6 is in a compressed state by retraction of the wire 8 is applied with an energization power by the support part movement component 6, the support part 5 moves in the direction of the upper part of the interior pipe 2 (in the upper direction towards Fig. 1) and its movement is stopped by the support part stopper 23.

The impact absorbing device relating to the present embodiment is controlled so that the wire 8 is released in two steps. That is, a first step of releasing wire 8 (below this state is called a first operation mode) and a second step of releasing wire 8 (below this state is called a second operation mode). The first operation mode is a mode in which the wire 8 is once released and in the case where the wire 8 is retracted a predetermined length from the lock mechanism 9, the wire 8 is again latched. The second operation mode, however, is a mode in which the entire wire 8 is released, and once released the wire 8 is not latched again.

In the first operation mode, when the wire 8 is released the support part movement component 6 which is compressed by the support part 5 together with the retraction of the wire 8, rebounds and the support part 5 is applied with an energization power and moves in the direction of the upper part of the interior pipe 2 (in the upper direction towards Fig, 1). The wire 8 which is connected to the support part 5 is withdrawn from the lock mechanism 9. The controller 300 controls the release of the wire 8 and when the wire 8 is withdrawn from the lock mechanism 9 at a predetermined length, instructs the lock mechanism 9 to latch the wire 8. The lock mechanism 9 once again latches the wire 8 and the movement of the support part 5 is stopped. At this time, the second section 54 of the support part 5 is placed in a position which faces each of the movable resistance body accommodation parts 25 which are arranged on the interior pipe base part 24 respectively. Therefore, each of the movable resistance bodies 3 which are arranged within each of the movable resistance body accommodation parts 25 respectively is able to move as far as the second section 54 respectively. Next, in the case of the second operation mode, the wire 8 which is released once is not latched again by the lock mechanism 9. Therefore, the support part 5 which is connected to the wire 8 is applied with an energization power by the support part movement component 6 and moves in the direction of the upper part of the interior pipe 2. Then, the movement of the support part 5 is stopped by the support part stopper 23. At this time, the third section 56 which is equivalent to the lowest part of the support part 5 blocks the interior opening of each of the movable resistance body accommodation parts 25. Therefore, each of the movable resistance bodies 3 can no longer move to the first section 51 and the second section 54 respectively. However, in the case where the wire 8 is retracted, the support part 5 moves in the direction of the lower part of the interior pipe 2 (in the lower direction towards Fig. 1) while the support part movement component 6 is compressed, and its movement is stopped when the support part 5 comes into contact with the interior pipe bottom part flange 26. At this time, the first section 51 of the support part 5 is facing the opening of each of the movable resistance body accommodation parts 25 respectively. Therefore, each of the movable resistance bodies 3 which are arranged within each of the movable resistance body accommodation parts 25 respectively is able to move to the first section 51. Furthermore, the first section 51 and the second section 54 maybe a groove arranged on the exterior of the support part 5.

An interior pipe movement component 7 is arranged on the interior of the interior pipe 2. The interior pipe movement component 7 is a means for applying an energization power to the interior pipe 2 which is arranged within the exterior pipe 1 in order to project the interior pipe 2 from the exterior pipe 1. In the present embodiment, a spring is used as the interior pipe movement component 7. However, the interior pipe movement component 7 is not limited to a spring. Other means which apply an energization power may be used. For example, a different elastomer or hydraulic cylinder may be used.

The interior pipe movement component 7 is arranged so that one end is in contact with the interior of the interior pipe upper part 21. In addition, the interior pipe movement component 7 is arranged so that the other end is in contact with the exterior pipe bottom part 16. Therefore, when an energization power is applied via the interior pipe movement component 7 the interior pipe 2 is projected from the exterior pipe 1. Furthermore, the interior diameter of the exterior pipe upper part 11 is smaller than the exterior diameter of the interior pipe base part 24. Therefore, in the case where the interior pipe 2, which is applied with an energization power via the interior pipe movement component 7, moves in a projection direction, the upper surface of the interior pipe base part 24 comes into contact with the bottom surface of the exterior pipe upper part 11 and the projection of the interior pipe 2 is stopped. Furthermore, a separate wire is connected to the interior pipe 2 allowing the movement of the support part 5 and the projection of the interior pipe 2 to be controlled separately.

As stated above, the wire 8 is connected to the motor unit 200 via the lock mechanism 9. In the present embodiment the wire 8 is connected to the motor 201 of the motor unit 200 via a gearbox 202 and a pulley 203. However, it is not limited to this. According to necessity, the pulley 203 etc may be optional.

The lock mechanism 9 latches the retracted wire 8 which is retracted by the motor unit 200 based on an instruction from the controller 300 (below, this state may be referred to as a locked state). In this locked state the support part movement component 6 is compressed by the retraction of the wire 8 and the support part 5 remains in a state of contact with the interior pipe bottom part flange 26. In the present embodiment, an example is shown where the lock mechanism 9 is arranged on the exterior of the impact absorbing device body 100, however, the lock mechanism 9 may also be arranged, for example, on the bottom part 16 of the exterior pipe 1. Furthermore, the release of the wire 8 by the lock mechanism 9 is controlled by the controller 300 which receives data from the sensor 400 which detects the addition of an impact to the impact absorbing device and the operation of the motor unit 200 may be linked with the operation of the lock mechanism 9 by the controller 300.

The controller 300 is constructed, for example, from a plurality of semiconductor integrated circuits (IC). The controller 300 receives data from the sensor 400, transmits an operation instruction to the motor unit 200 and controls the operation of the lock mechanism 9.

In the present embodiment, the sensor 400 includes a radar 401 and a CCD camera 402. The distance to an object can be assessed by the radar 401 and the shape of an object can be assessed by the CCD camera 402. The distance to an object and the shape of an object is transmitted to the controller 300 as data by the sensor 400. The controller 300 judges whether the object is a pedestrian or not based on data received from the sensor 400 and transmits a necessary instruction to the motor unit 200. Furthermore, the structure of the sensor 400 is not limited to the above stated structure.

In the present embodiment, among carbon steel pipes for machine structure (STKM), SKTM 13C is used for the exterior pipe 1 and the interior pipe 2. According to the present embodiment, carbon steel pipe for machine structure (STKM) which has been a heat treated is used for the support part 5. Specifically, among carbon tool steels (SK), STKM 13C pipe which has been heat treated or SK7 pipe are used for the support part 5. In addition, according to the present embodiment high carbon chromium bearing steel material (SUJ-2) or high hardness stainless steel (SUS440C) is used in the movable resistance bodies 3.

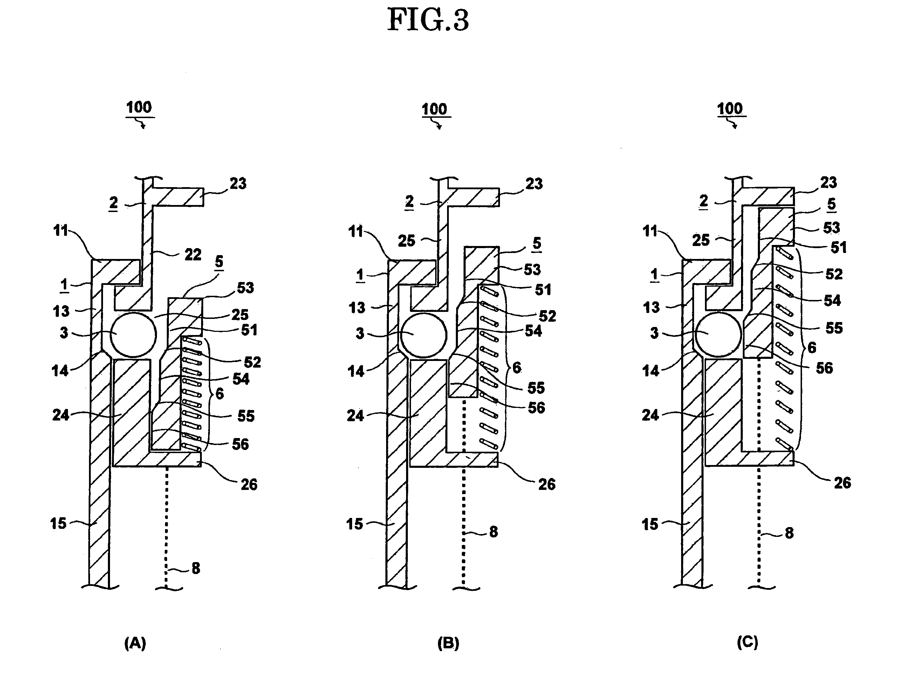

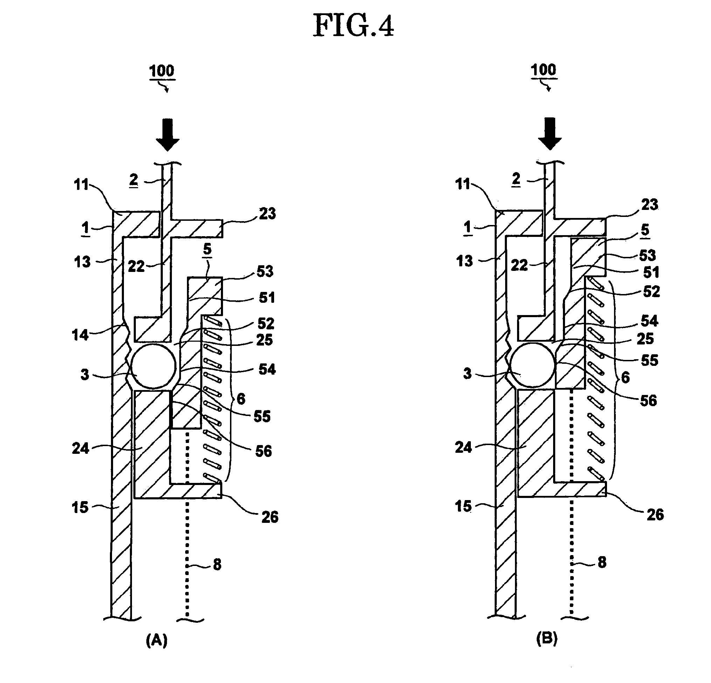

Next, the workings of the support part 5 of the impact absorbing device related to the present embodiment will be explained based on Fig. 3 and Fig. 4. Fig. 3 is an enlarged view of one part of an impact absorbing device related to one embodiment of the present invention. Fig. 3 (A) shows the support part 5 in a normal state, Fig. 3 (B) shows the state of the support part 5 during the first operation mode and Fig. 3 (C) shows the state of the support part 5 during the second operation mode. Fig. 4 is an enlarged diagram of one part of an impact absorbing device related to one embodiment of the present invention in the case where an impact is applied. Fig. 4 (A) shows the case where an impact is applied during the first operation mode. Fig. 4 (B) shows the case where an impact is applied during the second operation mode. Furthermore, the interior pipe movement component 7 is omitted in Fig. 3 and Fig. 4. The impact absorbing device related to one embodiment of the present invention is characterized by being able to switch a means for absorbing an impact at the stage where an impact to parts which are attached to the exterior of the impact absorbing device, a bumper for example, is predicted. In the switching process, the first operation mode is set in the case where a collision with an object is predicted to have a weak impact and the second operation mode is set in the case where a collision with an object is predicted to have a strong impact. The switching is carried out by switching to a state which can completely absorb a strong impact. The support part 5 and a plurality of movable resistance bodies 3 play a fundamental role during this switching.

The impact absorbing device related to one embodiment of the present invention is attached to the interior of a bumper in a state where the interior pipe 2 is projected from the exterior pipe 1. After attaching, the wire 8 is retracted by the motor unit 200. The support part 5 moves the interior of the interior pipe 2 in a downward direction and the bottom part of the support part 5 comes into contact with the interior pipe bottom part flange 26. When the wire 8 is further retracted, the force of this retraction acts as a force to move the interior pipe 2 into the exterior pipe 1 while the interior pipe movement component 7 is compressed via the support part 5. The wire 8 is latched and fixed by the lock mechanism 9 while the interior pipe bottom part flange 26 is in contact with the exterior pipe bottom part 16. In this state, the interior pipe movement component 7 is compressed and the support part movement component is also compressed and the first section 51 of the support part 5 faces the interior of the opening of each of the movable resistance body accommodation parts 25. The first section 51 is formed so that the distance to the side wall surface of the interior pipe base part 24 is large. Therefore, each of the movable resistance bodies 3 which are arranged within each of the movable resistance body accommodation parts 25 respectively can move freely to the first section 51 and the interior of each of the movable resistance body accommodation parts 25. As stated, because the first section 51 is formed so that the distance to the side wall surface of the interior pipe base part 24 is large, if each of the movable resistance bodies 3 moves as far as the first section 51 respectively, each of the movable resistance bodies 3 is accommodated within each of the movable resistance body accommodation parts 25 respectively and one part of each of the movable resistance bodies 3 is not projected from the opening of the exterior pipe 1 side of each of the movable resistance body accommodation parts 25 respectively(refer to Fig. 3 (A)). The sensor 400 predicts a collision with an object and in the case where the controller 300 judges that the object is a pedestrian and the like and the impact will be weak, the controller instructs the lock mechanism 9, the wire 8 is released to a predetermined position and the first operation mode is set. When the wire 8 is released, the interior pipe 2 is applied with an energization power by the return force of the compressed interior pipe movement component 7. The interior pipe 2 moves in an upper direction of the exterior pipe 1 by this energization power. Then, the upper surface of the interior pipe base part 24 which has a larger exterior diameter than the interior diameter of the exterior pipe upper part 11, comes into contact with the lower surface of the exterior pipe upper part 11 and movement of the interior pipe 2 is stopped. Alternatively, the support part 5 is applied with an energization power by the return force of the compressed support part movement component 6 and the support part 5 moves in the direction of the upper part of the interior pipe 2. However, when the wire 8 is withdrawn a fixed length from the lock mechanism 9, because the wire 8 is latched again by the lock mechanism 9, the movement of support part 5 is stopped at a midway point. In this state, because the second section 54 of the support part 5 faces the interior opening of each of the movable resistance body accommodation parts 25, each of the movable resistance bodies 3 can move freely between each of the movable resistance body accommodation parts 25 and the second section 54. Because the second section 54 is formed so that the distance to the side wall surface of the interior pipe base part 24 is smaller compared to the first section 51, in the case where each of the movable resistance bodies 3 moves as far as the second section 54 respectively in this state, one part of each of the movable resistance bodies 3 projects from the opening of the exterior pipe 1 side of each of the movable resistance body accommodation parts 25 respectively (refer to Fig. 3 (B)).

In the above stated first operation mode state, when an impact is applied to the interior pipe 2 the interior pipe 2 moves in a direction of the interior of the exterior pipe 1 as shown in Fig. 4 (A). Together with the movement of the interior pipe 2 each of the movable resistance bodies 3 which has each of one parts projecting from the opening of the exterior pipe 1 side of each of the movable resistance body accommodation parts 25 respectively comes into contact with a boundary surface (exterior pipe first tapered part) 14. Because each of one part of each of the movable resistance bodies 3 which is positioned on the interior opening side of each of the movable resistance body accommodation parts 25 respectively is in contact with the second section 54 respectively, each of the movable resistance bodies 3 cannot escape into the interior respectively. When the interior pipe 2 moves further, each of the movable resistance bodies 3 generates friction or stress between the boundary surface 14 of the exterior pipe 1 and the exterior pipe impact absorption part 15 respectively and generates a load which plastically transforms the exterior pipe impact absorption part 15 which is formed from a low hardness material. However, because the projection to the exterior pipe 1 side of each of the movable resistance bodies 3 is not very large respectively, only one fixed part of the interior surface of the exterior pipe impact absorption part 15 is plastically transformed. The impact which is applied to the interior pipe 2 is absorbed as the plastic transformation energy of the interior surface of the exterior pipe impact absorption part 15.

Next, the case where a strong impact is predicted will be explained based on Fig. 3 (C). When it is recognized from the data of the sensor 400 (not shown in the Figure) that the collision object is a vehicle, the controller 300 instructs the lock mechanism 9 (not shown in the Figure) to release the wire 8. The lock mechanism 9 which receives this instruction releases all of the wire 8. Because the operation in which the interior pipe 2 projects from the upper part of the exterior pipe 1 and stops is the same as in the case where a weak impact is predicted as stated above, an explanation will be omitted here. The support part 5 which is connected to one end of the wire 8 is applied with an energization power by the return force of the compressed support part movable component 6, and is moved in the direction of the upper part of the interior pipe 2. However, because the wire 8 is not latched again by the lock mechanism 9, the support part 5 comes into contact with the support part stopper 23 and its movement is stopped. In this state, the interior of the opening of each of the movable resistance body accommodation parts 25 is closed by the third section 56 of the support part 5. In the case where each of the movable resistance bodies 3 moves in the direction of the first section 51 respectively, when the support part 5 moves in an upwards direction each of the movable resistance bodies 3 comes into contact with the first tapered part of support part 52 of the lower part of the first section 51 and also with the second tapered part of support part 55 of the lower part of the second section 54 respectively. When the support part 5 moves further in an upwards direction, each of the movable resistance bodies 3 is moved to the exterior pipe 1 side of each of the movable resistance body accommodation parts 25 respectively by the second tapered part of support part 55 and third section 56 which is equivalent to the lower part of the support part 5 closes the interior of the opening of each of the movable resistance body accommodation parts 25 respectively. When the movement of the support 5 is stopped by the support part stopper 23, the support part 5 becomes fixed by the closing of the interior of the opening of each of the movable resistance body accommodation parts 25 respectively at the third section 56 as shown in Fig. 3 (C).

The case where the interior pipe 2 is applied with a strong impact and moves in a downward direction will be explained based on Fig. 3 (C) and Fig. 4 (B). As shown in Fig. 3 (C), when the interior opening of each of the movable resistance body accommodation parts 25 is closed by the third section 56 of the support part 5, each of the movable resistance bodies 3 is pushed to the exterior of each of the movable resistance body accommodation parts 25 respectively by the support part 5 and one part of each of the movable resistance bodies 3 projects considerably from each of the movable resistance body accommodation parts 25 respectively. In this state, when the interior pipe 2 moves in the direction of the interior of the exterior pipe 1, one part of each of the movable resistance bodies 3 which is projected comes into contact with the exterior pipe first tapered part 14 respectively. As is shown in Fig. 4 (B), when the interior pipe 2 moves further in a direction of the interior of the exterior pipe 1, because the interior opening of each of the movable resistance body accommodation parts 25 is closed by the third section 56 of the support 5 respectively, each of the movable resistance bodies 3 has nowhere to move. Therefore, one part of each of the movable resistance bodies 3 which is considerably projected moves in a downward direction while the exterior pipe first tapered part 14 and the impact absorption part 15 are compressed. Therefore, an extremely strong friction or stress is generated between each of the movable resistance bodies 3 and the exterior pipe first tapered part 14 and the exterior pipe impact absorption part 15 respectively. As stated above, because each of the movable resistance bodies 3 has a high level of hardness, the interior of the exterior pipe first tapered part 14 and the exterior pipe impact absorption part 15 are plastically transformed greatly by this friction or stress. In this way, the impact applied to the interior pipe 2 is absorbed as energy which plastically transforms the exterior pipe impact absorption part 15. Furthermore, the release of the above stated wire 8 can be performed manually by a driver.

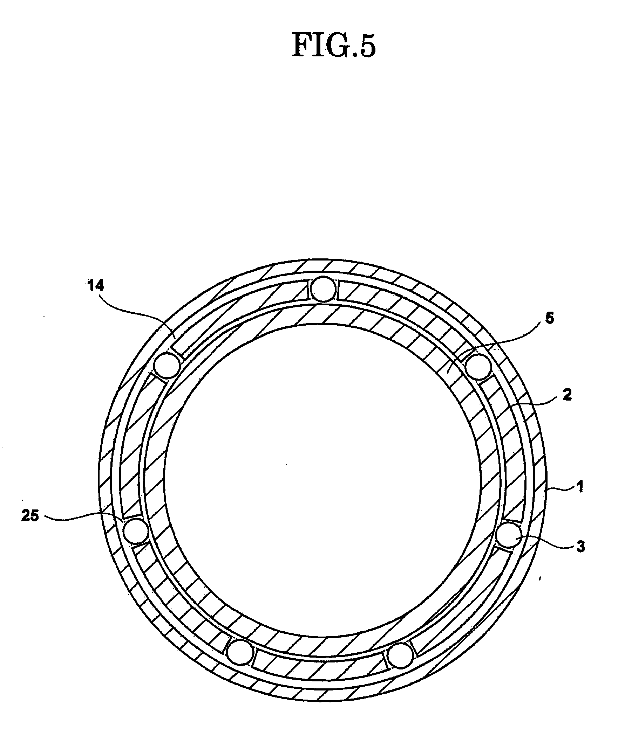

This impact absorption force can be adjusted by the number of movable resistance bodies 3 which are arranged on the impact absorbing device. Fig. 5 is cross sectional view of the direction A-A in Fig. 1 of an impact absorbing device related to embodiment one of the present invention. As is shown in Fig. 5, in the impact absorbing device in the present embodiment, seven movable resistance body accommodation parts 25 are formed at even intervals in a periphery direction on the side wall part of the interior pipe 2 and a movable resistance body 3 is arranged within each of these accommodation parts. Therefore, the seven movable resistance bodies 3 plastically transform the exterior pipe impact absorption part 15 and thus the impact absorbing device in the present embodiment absorbs the impact of a collision with an object. Furthermore, the number of movable resistance bodies 3 which are arranged is not limited to seven. This number can be adjusted according to the expected impact force.

In the case where a collision with a vehicle can be avoided, the impact does not change at all the exterior pipe 1 and the interior pipe 2. The impact absorbing device relating to one embodiment of the present invention can be easily returned to its normal state in this type of case. Specifically, by retracting the wire 8 using the motor unit 200 shown in Fig. 1, the support body 5 which is connected to one end of the wire 8, is pulled back while the support part movement component 6 is compressed, and comes into contact with the interior pipe bottom part flange 26. When further retraction force is applied, this retraction force works as a force to pull back the interior pipe 2 via the support part 5 into the exterior pipe 1. The interior pipe 2 moves to the interior of the exterior pipe 1 while the interior pipe movement component 7 is compressed. Then, the interior pipe bottom part flange 26 comes into contact with the exterior pipe bottom part 16 and the movement of the interior pipe 2 is stopped. At this time, the first section 51 of the support part 5, which moved in the direction of the interior pipe bottom part flange 26 while the support part movement component 6 is compressed, faces each of the movable resistance body accommodation parts 25. By fixing the wire 8 in this position by latching via the lock mechanism 9, it is possible to return the impact absorbing device to its normal state. Therefore, the impact absorbing device related to one embodiment of the present invention is economical because it can be easily restored to a normal state and repeatedly used in the case where a collision with a vehicle etc has been avoided.

The impact absorbing device related to the present embodiment can absorb the impact force of a collision with a pedestrian or a vehicle by itself. Therefore, because there is no need to arrange a separate energy absorber for pedestrians or an energy absorber for vehicles, this impact absorbing device is compact and does not affect the overall length of a vehicle.

As explained above, the impact absorbing device related to the present embodiment can be easily switched between an impact absorption means for absorbing a weak impact and an impact absorption means for absorbing a strong impact by a simple structure. In addition, by adjusting the number of movable resistance bodies 3 which are arranged, it is possible to finely set the impact absorption abilities of the impact absorbing device. Furthermore, this impact absorbing device can easily be restored to a normal state from a state in which it is prepared for an impact. Therefore, in the case where a collision has been avoided, it is possible to return the device to a normal state and repeatedly use the impact absorbing device. Because the impact absorbing device related to the present embodiment has a simple structure it does not require a great number of additional parts. In addition, in a normal state, because the interior pipe 2 is housed within the exterior pipe 1, there is no effect to the overall length of a vehicle when setting the device.

The impact absorbing device related to the present embodiment is fitted within the front bumper of a vehicle. One device can be fitted in the left and right side of the front bumper respectively or one device alone can be fitted to the center of the front bumper. In addition, a total of three devices, on the left side, right side and center, can also be fitted to the front bumper. By adjusting the number of impact absorbing devices to be fitted, it is possible to more completely absorb an impact force of a collision with a vehicle etc. In addition, the impact absorbing device related to one embodiment of the present invention can be fitted not only within the front bumper but also the rear bumper of a vehicle. The number of devices that can be fitted is not limited to one and can be two or more. In this case, the device is arranged with the addition of a sensor device to the rear bumper for example. Furthermore, the impact absorbing device related to one embodiment of the present invention can also be used as a side guard device for the side of a vehicle, for example, in combination with a large said mole. Generally, compared to the front and rear section of a vehicle, the side is more fragile to impacts from a collision, however, by using the device in this way, it is possible to guarantee the safety of passengers by effectively absorbing the impact of a collision against the side of a vehicle.

As explained above, the structure of the impact absorbing device of the present invention can easily and completely absorb an impact and the impact absorption abilities of the impact absorbing device can be adjusted according to a collision object.

### (Embodiment Two)

As explained above, the impact absorbing device related to embodiment one of the present invention houses an interior pipe within an exterior pipe during a normal state and when a collision with an object is predicted by a sensor device, the interior pipe is projected from the exterior pipe. In addition, the strength of the impact force is predicted by a controller by judging the object of the collision and it is possible to adjust the impact absorption abilities of the impact absorbing device into two levels so that the impact force can be absorbed appropriately. In the impact absorbing device related to embodiment two of the present invention, the interior pipe remains projected from the exterior pipe. However, the impact absorption abilities of the impact absorbing device can be adjusted into three levels.

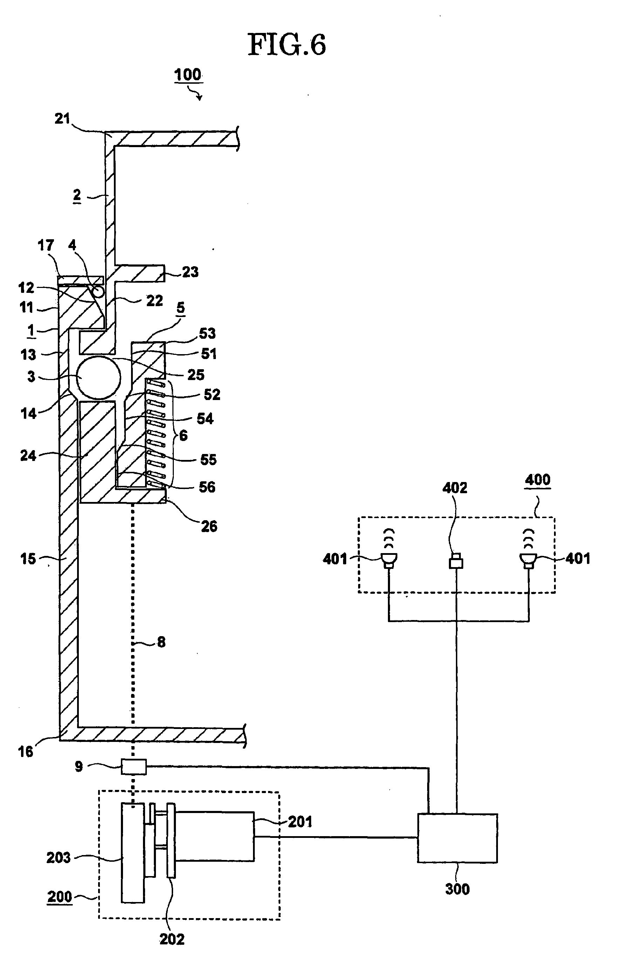

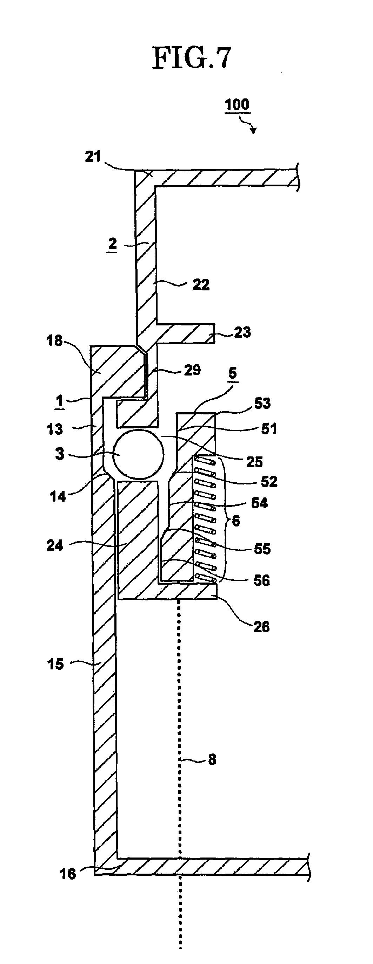

The impact absorbing device related to embodiment two of the present invention will be explained. Fig. 6 and Fig. 7 are cross sectional views of the impact absorbing device related to embodiment two of the present invention. As is shown in Fig. 6 and Fig. 7, because the impact absorbing device's main structural parts and their arrangement has common points with the impact absorbing device related to embodiment one of the present invention, the same parts have the same symbols and thus they will not be explained here.

The impact absorbing device related to the present embodiment is characterized by having a plurality of resistance bodies other than a plurality of movable resistance bodies between an exterior pipe upper part and an interior pipe. By having this plurality of resistance bodies the impact absorption abilities of the impact absorbing device is adjusted into three levels.

As is shown in Fig. 6, the impact absorbing device related to embodiment two of the present invention further includes a plurality of second resistance bodies 4 between an upper part 11 of the exterior pipe 1 and an interior pipe side wall part 22. As a result, the upper part 11 of the exterior pipe 1 is formed in a taper shape so that the interior side which faces the interior pipe 2 slants outwards towards the exterior of the upper part 11. This tapered shape part is called exterior pipe second tapered part 12. In addition, this space which is formed between the exterior pipe second tapered part 12 and the interior pipe side wall part 22 and which is formed in the direction of the upper part 11 is sometimes called a taper shape space. Furthermore, as will be stated, because each of the second resistance bodies 4 is a sphere, the friction which is generated between the surface of the interior pipe 2 and the surface of each of the second resistance bodies 4 respectively is a rolling friction which has much less resistance than a sliding friction. Therefore, when the interior pipe 2 moves in the direction of the interior of the exterior pipe 1, each of the second resistance bodies 4 receives a drag from the exterior pipe second tapered part 12 respectively. Then, a force which attempts to push each of the second resistance bodies in an upwards direction respectively is generated. Therefore, if this force is larger than the rolling friction, each of the second resistance bodies is not restrained by the movement of the interior pipe 2 and its spins around in the same place. Thus, in the impact absorbing device related to embodiment two of the present invention, the angle of the exterior pipe second tapered part is set sharply and when the interior pipe 2 receives an external impact and moves at a fast speed in the direction of the interior of the exterior pipe 1, the friction which is generated between the surface of the interior pipe side wall part 22 and the surface of each of the second resistance bodies 4 is set so that it becomes larger than the drag from the exterior pipe second tapered part 12. In the present embodiment the sharp angle is set at 10 degrees, however it is not limited to this.

Unlike the impact absorbing device related to embodiment one of the present invention stated above, the interior pipe side wall part 22 of the impact absorbing device related to the present embodiment is formed with a low hardness material the same as the exterior pipe impact absorption part 15. Therefore, in the present embodiment, the interior pipe side wall part 22 is called the interior pipe impact absorption part 22 (second impact absorption part) and the exterior pipe impact absorption part 15 is called the first impact absorption part.

A plurality of second resistance bodies 4 each of which has a smaller diameter than each of the first resistance bodies 3 respectively is set between the exterior pipe second tapered part 12 and the interior pipe impact absorption part 22. Each of the plurality of second resistance bodies 4 is a sphere and in the present embodiment a steel sphere is used. However, each of the second resistance bodies 4 is not limited to this. Furthermore, in order to prevent each of the second resistance bodies 4 from projecting outside of the taper shape space respectively, an exterior pipe lid 17 is arranged so that the exterior pipe upper part 11 is covered after arranging a plurality of second resistance bodies 4. The exterior pipe lid 17 has a disc shape in which an opening is formed on the interior periphery and also has a larger interior diameter than the exterior diameter of the interior pipe impact absorption part 22. Furthermore, unlike the impact absorbing device related to embodiment one of the present invention stated above, the impact absorbing device related to embodiment two of the present invention is not arranged with an interior pipe movement component 7. Therefore, during a normal state, the interior pipe 2 of the impact absorbing device related to the present embodiment is projected from the exterior pipe 1. In addition, because other structural parts and their arrangement are the same as in the impact absorbing device related to embodiment one of the present invention stated above they will not be explained here.

The impact absorbing mechanism of the impact absorbing device related to embodiment two of the present invention with the above stated structure will be explained. As stated above, in the impact absorbing device related to embodiment two of the present invention, the interior pipe 2 is projected from the exterior pipe 1 during normal operation. The controller 300 predicts a collision with an object based on data from the sensor 400 and in the case where the impact is judged to be weak, the controller 300 does not instruct the lock mechanism 9 to release the wire 8. In the case where the impact is applied to the interior pipe upper part 21, the interior pipe 2 moves in a direction of the interior of the exterior pipe 1. At this time, because the exterior pipe second tapered part 12 is formed at a sharp angle, each of the second resistance bodies 4 which are set in the taper shape space between the exterior pipe second tapered part 12 and the interior pipe impact absorption part 22 respectively, are moved toward the bottom of the taper shape space respectively together with the movement of the interior pipe 2 by the friction between the interior pipe impact absorption part 22. Each of the second resistance bodies 4 is sandwiched between the exterior pipe second tapered part 12 and the interior pipe impact absorption part 22 respectively and a strong friction or stress is generated between each of the second movable resistance bodies 4 and the interior pipe impact absorption part 22. Because each of the second resistance bodies 4 is formed with a material of high hardness respectively and the interior pipe impact absorption part 22 is formed with a material of low hardness, each of the resistance bodies 4 plastically transforms the interior pipe impact absorption part 22 respectively. However, because the controller 300 does not instruct the wire 8 to be released, the support part 5 remains in contact with the interior pipe bottom part flange 26 and the first section 51 faces each of the movable resistance body accommodation parts 25. Therefore, when the interior pipe 2 moves in an interior direction of the exterior pipe 1, each of the movable resistance bodies 3 comes in contact with the exterior pipe first tapered part 14 respectively, moves in the interior direction of each of the movable resistance body accommodation parts 25 respectively and one part of each of the movable resistance bodies 3 comes into contact with the first section 51 respectively. Each of the movable resistance bodies 3 contacts the exterior pipe impact absorption part 15 without any resistance respectively and therefore, even if the interior pipe 2 moves further in the interior direction of the exterior pipe 1, no friction or stress is generated between them. The impact which is applied to the interior pipe 2 is converted into energy which is used mainly by each of the second resistance bodies 4 to plastically transform the interior pipe impact absorption part 22 and then absorbed.

The controller 300 predicts a collision with an object based on the data from the sensor 400 and when the impact is judged to be moderate, the controller 300 instructs a first operation mode. As stated above, during the first operation mode, because the second section 54 faces a plurality of movable resistance body accommodation parts 25, when each of the movable resistance bodies 3 moves as far as the second section 54, one part of each of the movable resistance bodies 3 projects from the opening of the exterior pipe 1 side of each of the movable resistance body accommodation parts 25 respectively. When the interior pipe 2 receives an impact and moves in an interior direction of the exterior pipe 1, a strong friction or stress is generated between each of the second resistance bodies 4 and the interior pipe impact absorption part 22 as stated above. However, the movement of each of the movable resistance bodies 3 in the direction of the support part 5 is blocked by the second section 54 and one part of each of the movable resistance bodies 3 projects from the exterior pipe side of each of the movable resistance body accommodation parts 25 respectively. Therefore, as explained in embodiment one of the present invention, together with the movement of the interior pipe 2, the interior surface of the exterior pipe impact absorption part 15 is plastically transformed by each of the movable resistance bodies 3. Therefore, in this case, each of the second resistance bodies 4 plastically transforms the interior pipe impact absorption part 22 respectively and each of the movable resistance bodies 3 plastically transforms the interior surface of the exterior pipe impact absorption part 15 respectively and thus the impact applied to the interior pipe 2 is absorbed.

The controller 300 predicts a collision with an object based on the data from the sensor 400 and when the impact is judged to be strong, the controller 300 instructs a second operation mode. As stated above, during the second operation mode, because the third section 56 is facing each of the movable resistance body accommodation parts 25 and closes off each of the movable resistance body accommodation parts 25, even if each of the movable resistance bodies 3 moves to the support part 5 side of each of the movable resistance body accommodation parts 25 respectively, one part of each of the movable resistance bodies 3 is significantly projected from the opening of the exterior pipe 1 side of each of the movable resistance body accommodation parts 25 respectively. When an external impact is received and the interior pipe 2 moves in an interior direction of the exterior pipe 1, a strong friction or stress is generated between each of the second resistance bodies 4 and the interior pipe impact absorption part 22 as stated above. However, because one part of each of the movable resistance bodies 3 is significantly projected form the exterior pipe side of each of the movable resistance body accommodation parts 25 respectively, together with the movement of the interior pipe 2 the exterior pipe impact absorption part 15 is significantly plastically transformed by each of the movable resistance bodies 3. Therefore, in this case, each of the second resistance bodies 4 plastically transforms the interior pipe impact absorption part 22 respectively and each of the movable resistance bodies 3 plastically transforms the exterior pipe impact absorption part 15 respectively and thus the impact applied to the interior pipe 2 is absorbed. As explained above, the impact absorption abilities of the impact absorbing device related to embodiment two of the present invention can be adjusted into three levels.

The impact absorbing device related to embodiment two of the present invention can easily be returned to a normal state the same as the impact absorbing device related to embodiment one of the present invention in the case where a collision is avoided. In this case, there is no damage at all to the interior pipe 2 or the exterior pipe 1. In the case where the controller 300 instructs a first operation mode or a second operation mode and a collision is avoided, the controller 300 instructs the motor unit 200 to retract the wire 8. Together with the retraction of the wire 8 by the motor unit 200, the support part 5 moves in the direction of the interior pipe bottom part while the support part movement component 6 is compressed and the support part 5 comes into contact with the interior pipe bottom part flange 16 and its movement is stopped. In this state, when the wire 8 is latched by the lock mechanism 9, the device is in a normal state. Therefore the impact absorbing device can easily be returned to a normal state.

Furthermore, in the impact absorbing device related to embodiment two of the present invention, another resistance body which is set between the upper part 11 of the exterior pipe 1 and the interior pipe side wall part 22 is not limited to the above stated second resistance bodies 4. Fig. 7 shows a different example of another resistance body. In the impact absorbing device related to the present embodiment shown in Fig. 7, instead of arranging a plurality of second resistance bodies 4 the exterior pipe upper part is arranged so that it cuts into the lower part of the interior pipe impact absorption part 22. Therefore, this exterior pipe upper part is called the exterior pipe resistance upper part 18 and the side surface part of the interior pipe into which the exterior pipe resistance upper part 18 cuts is called the interior pipe connection part 29 (below sometimes referred to as the second connection part).

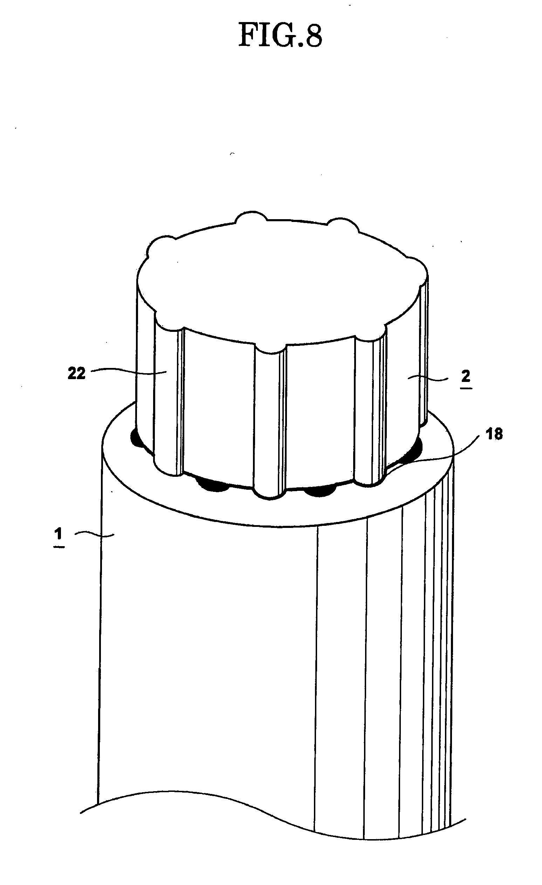

The exterior pipe resistance upper part 18 of the impact absorbing device related to the present embodiment, is formed with a material harder than that of the interior pipe 2, for example, by cold forging technology which is used in the manufacture of bolts etc. That is, in the manufacturing process, the upper part 18 of the exterior pipe is formed so that it cuts into the interior pipe connection part 29 by placing molding and squeezing processes, for example. In addition, as a different forming method the upper part 18 of the exterior pipe can be formed by twisting together the exterior pipe 1 and the interior pipe 2 as shown in Fig. 8. That is, a projection part (The part equivalent to the interior pipe impact absorption part 22 in Fig. 8) having a predetermined semicircular column shape is formed on the external periphery of the interior pipe 2, while a predetermined number of corresponding semicircular cut outs are formed on the interior periphery of the external pipe 1. The semicircular column shaped projection parts formed on the interior pipe 2 are formed to a length at which the interior pipe 2 is projected from the exterior pipe 1. Then, the projection parts of the interior pipe 2 are aligned with the cut outs of the exterior pipe 1, the interior pipe 2 is inserted from the bottom part 16 side of the exterior pipe into the interior of the exterior pipe 1, the interior pipe 2 is twisted and fixed. By twisting the interior pipe 2 the interior periphery of the exterior pipe 1 enters the lower end part of the projection part of the interior pipe 2 and the exterior pipe resistance upper part 18 cuts into the interior pipe connection part 29 as shown in Fig. 8. Furthermore, when formed according to this method, the bottom part of the exterior pipe 1 is initially opened and closed after inserting the interior pipe 2. It is possible to obtain the impact absorbing device related to embodiment two of the present invention by the above stated method.

As explained above, the impact absorption abilities of the impact absorbing device related to the present embodiment can be adjusted into three levels according to a predicted impact force. In addition, this impact absorbing device can be returned to a normal state in the case where a collision is avoided. Furthermore, although the interior pipe can not be housed within the exterior pipe an impact can be absorbed by this impact absorbing device alone. Therefore, because there is no need to install a separate energy absorber for pedestrians or an energy absorber for vehicles, this impact absorbing device can be compactly installed and does not affect the overall length of a vehicle.

### (Example One)

Another example of an impact absorbing device related to embodiment one and embodiment two of the present invention stated above will be explained below. Example one is a different example to the impact absorbing device related to embodiment one.

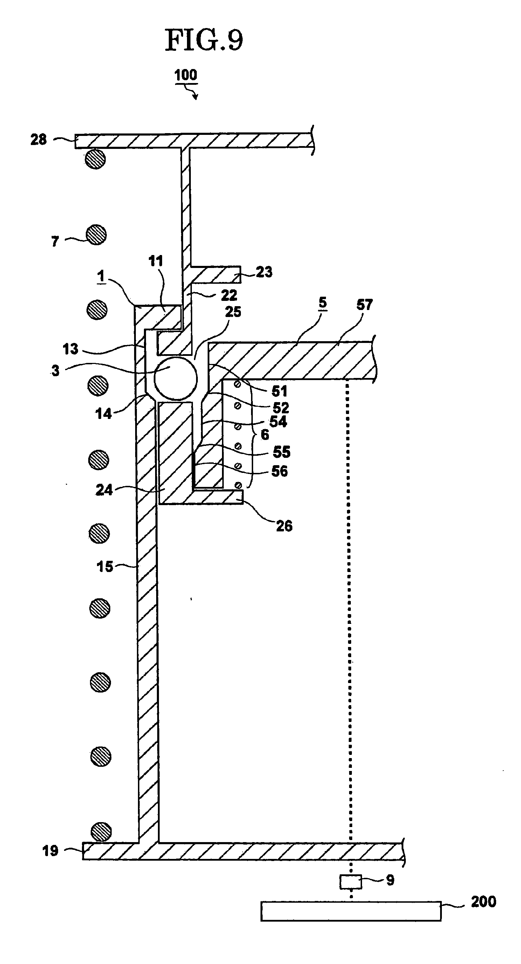

Example one will be explained based on Fig. 9. Fig. 9 is an outline structural view of an impact absorbing device related to example one of the present invention. The impact absorbing device related to the present example includes an interior pipe movement component 7 which projects the interior pipe 2, arranged on the exterior of the exterior pipe 1.

The interior pipe 2 of the impact absorbing device related to example one is an upper part which is closed the same as in embodiment one and embodiment two stated above, however, the interior pipe 2 is characterized by an interior pipe upper part flange 28 which projects towards the exterior of the upper part of the interior pipe 2. In addition, the bottom part of the exterior pipe 1 is open the same as embodiment one and embodiment two stated above, however, an exterior pipe bottom part flange 19 is included which projects towards the exterior of the exterior pipe 1. Also, the interior pipe movement component 7 which provides an energization power to the interior pipe 2 for projecting the interior pipe 2 from the exterior pipe 1 is arranged in a position on the exterior of the exterior pipe 1 between the interior pipe upper part flange 28 and the exterior pipe bottom part flange 19.

Furthermore, in the impact absorbing device related to example one of the present invention, the upper part of the support part 5 is closed as is shown in Fig. 9, and the support part 5 includes a bottom part which is closed and an upper part which has a closed cylinder cross sectional shape. That is, instead of the support part upper part flange 53 shown in embodiment one and embodiment two stated above, the support part 5 includes a closed upper part of support part 57. A first section 51 and a second section 54 are arranged on this cylindrical external periphery. And, one end of the wire 8 which is connected to the bottom part of the support part 5shown in embodiment one and embodiment two stated above is connected to the centre of the upper part of support part 57. Furthermore, because the other structural parts and their arrangement is the same as that in embodiment one and embodiment two stated above, their explanation is omitted.

In the impact absorbing device related to example one of the present invention having this structure, because the wire 8 is connected to the center of the upper part of support part 57, retraction and release of the wire 8 is easy. Therefore, in this impact absorbing device it is possible to easily restore the device to a normal state in the case where a first mode or a second mode is set and where a collision is avoided. In addition, because the interior pipe movement component 7 is arranged in a position on the exterior of the exterior pipe 1, a large coil spring can be used as the interior pipe movement component 7. Therefore, other than the role of providing an energization power to the interior pipe 2, for example, it is possible to make the interior pipe movement component 7 absorb the impact of a collision with an object. Furthermore, the impact absorbing mechanism of the impact absorbing device of the present example related to this structure during a collision with an object, is the same as the impact absorbing device related to embodiment one of the present invention stated above. That is, together with a predicted impact force, this is a method for adjusting the extent to which a plurality of movable resistance bodies 3 plastically transform the exterior pipe impact absorbing part 15 and adjusting the amount of impact energy absorption by adjusting the latching of the wire 8 by the lock mechanism 9 and setting a first operation mode or a second operation mode. Therefore, a detailed explanation is omitted. In addition, because the method of restoring the device to a normal state in the case where a collision is avoided is also the same, an explanation is omitted.

As explained above, the impact absorption abilities of the impact absorbing device related to the present example can be adjusted according to a predicted impact force. In addition, this impact absorbing device can easily be returned to a normal state in the case where a collision can be avoided. Furthermore, this impact absorbing device can be compactly installed and does not affect the overall length of a vehicle.

### (Example Two)

Another further example of an impact absorbing device related to embodiment one and embodiment two of the present invention will be explained below. The impact absorbing device related to this example is arranged with an impact absorption pipe between an exterior pipe and an interior pipe for absorbing an impact at the time of a collision with an object.

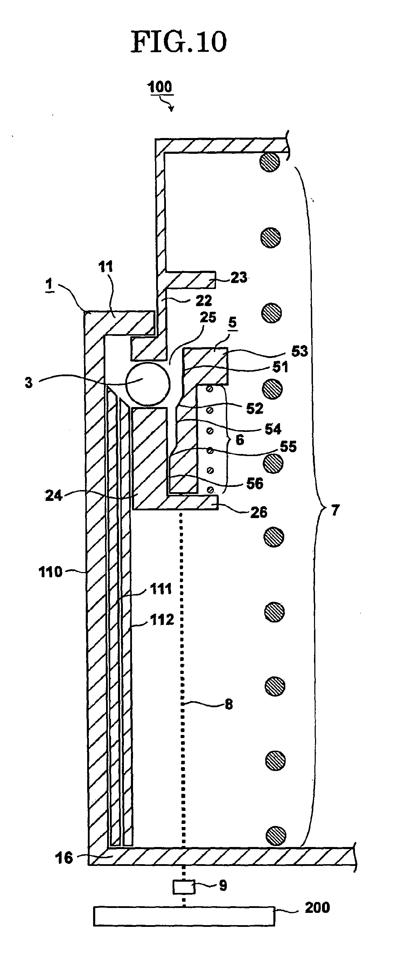

The impact absorbing device related to example two will be explained based on Fig. 10. Fig. 10 is an outline structural view of an impact absorbing device related to embodiment two of the present invention. As is shown in Fig. 10, almost all of the structural parts of the impact absorbing device related to the present example are common with those of the impact absorbing device related to embodiment one of the present invention. Therefore, the same parts have the same symbols and their explanation is omitted. In addition, a detailed explanation of each part and their arrangement is also omitted.

The impact absorbing device related to example two includes an impact absorption pipe between the exterior pipe 1 and the interior pipe 2 as stated above. In the present example, because two impact absorption pipes are arranged, one pipe is called a first impact absorption pipe 111 and the other pipe is called a second impact absorption pipe 112. The first impact absorption pipe 111 and the second impact absorption pipe 112 are formed with a material which is lees hard than a plurality of movable resistance bodies 3 and are pipes in which both ends have an open cylinder shape. However, the exterior pipe 1 of the impact absorbing device related to the present example is different to the exterior pipe 1 of the impact absorbing device related to embodiment one in that it does not include an exterior pipe impact absorption part 15 and also doesn't include a first section 13 and a boundary surface 14. The side wall part 110 of the exterior pipe 1 is formed so that the interior diameter from the upper part 11 to the bottom part 16 is the same. In addition, the material does not affect the material of a plurality of movable resistance bodies 3. Therefore, the side wall part 110 of the exterior pipe 1 may be formed from a less hard material, the same or harder material than a plurality of movable resistance bodies 3.

The first impact absorption pipe 111 and the second impact absorption pipe 112 make up the interior side of the exterior pipe side wall part 110 and are set so that their respective bottom parts are in contact with the exterior pipe bottom part 16 in a position on the exterior side of the base part 24 of the interior pipe 2. Then, the position of each of the pipes is set as follows. That is, in the first operation mode, in the case where a plurality of movable resistance bodies 3 moves in a direction of the second section 54 respectively, the second impact absorption pipe 112 is set in a position which is in contact with one part of each of the movable resistance bodies 3 which projects from each of the movable resistance body accommodation parts 25 respectively. In addition, during the second operation mode, in the case where the opening of the interior side of each of the movable resistance body accommodation parts 25 is closed by the third section 56 respectively, the first impact absorption pipe 111 is set in a position which is in contact with one part of each of the movable resistance bodies 3 respectively which projects significantly from each of the movable resistance body accommodation parts 25 respectively. Furthermore, each upper part end surface of the impact absorption pipes 111 and 112 may be formed in a taper shape from a bottom direction to an upper direction. By forming the upper part end surface of each of the impact absorption pipes 111 and 112 in this shape, in the case where the interior pipe 2 moves in a direction of the exterior pipe bottom part 16, each of the movable resistance bodies 3 can move easily in an interior direction of each of the movable resistance body accommodation parts 25 respectively. However, it is not limited to this shape.

The impact absorbing mechanism during a collision with an object of the impact absorbing device related to the present example with this structure will be explained. During a normal state, one part of the wire 8 which is connected to the bottom part of the support part 5 is retracted by the motor unit 200 and the lock mechanism 9 latches the wire 8 in this retracted state. Therefore, the first section 51 faces the interior opening part of each of the movable resistance body accommodation parts 25. In addition, the interior pipe 2 is in a housed state within the exterior pipe 1.

When the controller 300 predicts a weak impact from a collision with an object based on data from the sensor 400 and instructs a first operation mode, the lock mechanism 9 releases the wire 8 once and when the wire 8 is retracted a predetermined length again latches the wire 8. The interior pipe 2 projects from the exterior pipe 1, the upper surface of the interior pipe base part 24 comes into contact with the bottom surface of the exterior pipe upper part 11 and the movement of the interior pipe 2 is stopped. At this time, the support part 5 which is arranged in the interior of the interior pipe 2, is applied with an energization power by the support part movement component 6 and moves in the direction of the upper part of the interior pipe 2. Then, the second section 54 faces each of the interior opening part of the movable resistance body accommodation parts 25. One part of each of the movable resistance bodies 3 which moved in the direction of the second section 54, projects from each of the movable resistance body accommodation parts 25 respectively. When the interior pipe 2 moves in the direction of the exterior pipe bottom part 16 in this state, the projected part of each of the movable resistance bodies 3 comes into contact with the second impact absorption pipe 112 respectively. Because one side of each of the movable resistance bodies 3 is blocked (closed off) by the second section 54 respectively, together with the movement of the interior pipe 2, a strong friction or stress is generated between each of the movable resistance bodies 3 and the second impact absorption pipe 112 respectively and plastically transforms the second impact absorption pipe 112. Because the first impact absorption pipe 111 does not come into contact with each of the movable resistance bodies 3, it is not plastically transformed. Therefore, the collision energy is converted to transformation energy which solely allows a plurality of movable resistance bodies 3 to plastically transform the second impact absorption pipe 112 respectively and is absorbed.

When the controller 300 predicts a strong impact from a collision with an object based on data from the sensor 400 and instructs a second operation mode, the lock mechanism 9 releases all of the wire 8 and as stated above, the interior pipe 2 is projected from the exterior pipe 1. The third section 56 of the support part 5 is in a position facing the interior opening part of each of the movable resistance body accommodation parts 25. Therefore, each of the movable resistance bodies 3 can not move in an interior direction of each of the movable resistance body accommodation parts 25 respectively and one part of each of the movable resistance bodies 3 is significantly projected in an exterior direction of each of the movable resistance body accommodation parts 25 respectively. When the interior pipe 2 moves in the direction of the exterior pipe bottom part 16 in this state, one part of each of the movable resistance bodies 3 which is significantly projected comes into contact with the first impact absorption pipe 111 and the second impact absorption pipe 112 respectively. Because each of the movable resistance bodies 3 can not move in the interior direction of each of the movable resistance body accommodation parts 25 respectively, together with the movement of the interior pipe 2, a strong friction or stress is generated between each of the movable resistance bodies 3 and the impact absorption pipes 111 and 112 respectively and the impact absorption pipes 111 112 are plastically transformed. Therefore, the collision energy is converted to transformation energy which allows a plurality of movable resistance bodies 3 to plastically transform the first impact absorption pipe 111 and the second impact absorption pipe 112 respectively and is absorbed.

The method for restoring the device to a normal state in the case where a collision is avoided is the same as the method stated above in embodiment one of the present invention. Therefore, an explanation is omitted here. However, by a retraction of the wire 8 by the motor unit 200 it is possible to easily restore the device to a normal state. Furthermore, in the example stated above, two impact absorption pipes, first impact absorption pipe 111 and second impact absorption pipe 112 were arranged, however the number of pipes is not limited to this. By arranging one thick impact absorption pipe and by adjusting the amount by which this impact absorption pipe is plastically transformed according to the impact force by a plurality of movable resistance bodies 3, it is possible to adjust the impact absorption abilities of the impact absorbing device. In addition, it is also possible to adjust the impact absorption abilities of the impact absorbing device into three levels by arranging three or more impact absorption pipes and arranging the support body 5 with three or more movable resistance body accommodation parts 25.

As explained above, the impact absorbing abilities of the impact absorbing device related to the present example can be adjusted according to a predicted impact force. In addition, this impact absorbing device can easily be restored to an initial state in the case where a collision can be avoided. Furthermore, because the interior pipe is housed within the exterior pipe during a normal state, this impact absorbing device can be compactly installed and does not affect the overall length of a vehicle.

Furthermore, in the impact absorbing device related to this example, because an impact absorption pipe is solely and plastically transformed at the time of a collision with an object, there is no damage to the exterior pipe 1 and the interior pipe 2. Therefore, even in the case where a collision with an object has occurred, it is possible to easily restore the device to its normal state by replacing the impact absorption pipe. This is more economical compared to the impact absorbing device related to the above stated embodiment one or embodiment two.

### (Example Three)

Example three is a further example of an impact absorbing device related to embodiment one and embodiment two. In the impact absorbing device related to the present example, a metal pipe is not plastically transformed but elastically deformed and absorbs the impact force at the time of a collision with a vehicle for example. Therefore, even in the case where a collision occurs, it is possible to easily restore the impact absorbing device to its normal state and in terms of maintenance is extremely efficient.

Because the structural parts of the impact absorbing device related to the present example are the same as those of the impact absorbing device related to embodiment one and embodiment two of the present invention stated above, an explanation and drawings of the structure of the parts and their arrangement is omitted. However, for the purposes of explanation, an explanation of Fig. 1 which illustrates the impact absorbing device related to embodiment one of the present invention will be made. The material of the exterior pipe impact absorption part 15 of the impact absorbing device related to the present example is different to that of embodiment one in that it is formed with a material having elasticity. In the present example, a heat treated carbon steel pipe for machine structure STKM13C having elastic characteristics was used for the exterior pipe 1, however, it is not limited to this. A material having elastic characteristics which has been heat treated such as other carbon steel pipes for machine structure (STKM material) or spring-steel steel materials (SUP10 material) may also be used. In addition, a resin having elastic characteristics may also be used. Furthermore, an interior pipe movement component may or may not be arranged. However, because the impact absorbing device related to the present example can be easily restored to a normal state, it is preferred that an interior pipe movement component 7 be arranged.

In the present example, because the operation of each part of the impact absorbing device at the time of a collision with an object is the same as in embodiment one stated above, an explanation of the operation of each part is omitted. In the case where a strong impact is applied, a strong friction or stress is generated between a plurality of movable resistance bodies 3 and the exterior pipe impact absorption part 15 respectively. At this time, the exterior pipe 1 is significantly deformed by elastic deformation and absorbs the impact. However, in the case where a weak impact is applied, friction or stress is generated between a plurality of movable resistance bodies 3 and the exterior pipe impact absorption part 15 respectively and the exterior pipe 1 is slightly deformed by elastic deformation. The impact force is converted to an energy which greatly or slightly deforms the exterior pipe 1 by elastic deformation and is completely absorbed. The method for controlling the impact absorbing method according to the impact force predicted by the senor device 400 and the controller 300 is also the same as in embodiment one stated above. Furthermore, the impact absorption abilities can be adjusted by the number of movable resistance bodies 3 which are arranged.

Because each pipe is elastically deformed and absorbs an impact, the impact absorbing device related to the present example can be easily restored to a normal state even after a collision. The interior pipe 2 moves in an upper direction by the rebound force of the interior pipe movement component 7 which is compressed by a collision. A plurality of movable resistance bodies 3 which elastically deforms the exterior pipe 1 respectively also moves in an upper direction with the interior pipe 2 respectively. The movement of those movable resistance bodies 3 is stopped by the exterior pipe first tapered part 14 and the exterior pipe 1 which expanded in an exterior direction is restored to a normal state. In this way, it is possible to easily restore the impact absorbing device to a normal state. Therefore, maintenance costs can be kept low. The example in which an elastically deformed pipe is applied to the impact absorbing device shown in embodiment one was explained, however, this elastically deformed pipe can be applied to all the impact absorbing devices shown in the above stated embodiment two, example one and example two.

As explained above, the impact absorption abilities of the impact absorbing device related to the present embodiment can be adjusted according to a predicted impact force. In addition, this impact absorbing device can easily be restored to a normal state when a collision has been avoided. Furthermore, the installation area of the device itself can be omitted. This effect is the same as in the above stated embodiments one and two and example one and two. Furthermore, as stated above, this impact absorbing device has low maintenance costs.

Furthermore, in the impact absorbing device related to all the embodiments and examples of the present invention stated above, seven movable resistance bodies 3 and seven movable resistance body accommodation parts 25 are arranged. However, they are not limited to this number. Nine or eleven may be arranged or increased according to impact absorption abilities set in advance. In addition, they are not limited to an odd number. An even number may be arranged.

In addition, in the impact absorbing device related to all the embodiments and examples of the present invention, the first section 51 and the second section 54 may be formed as a depression, for example, in an L shape as stated above, or may be formed as a groove on a side wall facing the interior pipe 2 of the support part 5.

Furthermore, in the impact absorbing device related to all the embodiments and examples of the present invention, the shape of the exterior pipe 1 and the interior pipe 2 is not limited to a cylinder column shape and may be triangular column shape, square column shape, an elliptical column shape or other shape.

In addition, in the impact absorbing device related to all the embodiments and examples of the present invention, the movable resistance bodies 3 and the second resistance bodies 4 are preferably steel spheres. In addition, the shape of the movable resistance body 3 and the second resistance body 4 is preferably a sphere. However it is not limited to this. The movable resistance body 3 and the second resistance body 4 may be, for example, a circular column shape, a rugby ball shape or a triangular shape etc.

In addition, the sensor device 400 is comprised of a radar 401 and a CCD camera 402. However, the sensor 400 is not limited to this. The radar 401 may be a millimeter wave radar, a laser radar or any other radar. Furthermore, the CCD camera is also not limited.

## Claims

1. An impact absorbing device comprising:
an exterior pipe having an exterior pipe bottom part, an exterior pipe impact absorption part which absorbs external impacts, an exterior pipe upper part and an exterior pipe connection part which connects said exterior pipe impact absorption part and said exterior pipe upper part, said exterior pipe connection part having a larger interior diameter than an interior diameter of said exterior pipe impact absorption part,
wherein a boundary surface between said exterior pipe connection part and said exterior pipe impact absorption part is formed in a taper shape in a direction of said exterior pipe bottom part;
an interior pipe, said interior pipe having an interior pipe bottom part, said interior pipe bottom part having a flange which projects towards the interior, an interior pipe base part having one or more holes, an interior pipe upper part, an interior pipe side surface part having a smaller exterior diameter than an exterior diameter of said interior pipe base part, said interior pipe side surface part connecting said interior pipe base part and said interior pipe upper part, wherein said interior pipe is axially slidable in the interior of said exterior pipe;
one or more movable resistance bodies arranged in said one or more holes of said interior pipe respectively, said one or more movable resistance bodies having a smaller exterior diameter than an interior diameter of said one or more holes respectively;
a support part movably arranged in said interior pipe, said support part having a support part upper part, said support part upper part having a flange which projects towards the interior, said support part also having a support part side wall surface having a first section, a second section and a third section formed in this order so that the distance between each section and an interior side wall surface of said interior pipe base part becomes smaller and in a first operation mode said second section faces said one or more holes and in a second operation mode said third section faces said one or more holes;
an interior pipe movement component arranged between said interior pipe upper part and said exterior pipe bottom part, said interior pipe movement component applying an energization power in order to project said interior pipe from said exterior pipe: and
a support part movement component arranged between said support part upper part flange and said interior pipe bottom part flange.

2. The impact absorbing device according to claim 1 further comprising:
one or more impact absorption pipes arranged axially in a position on the interior of said exterior pipe and the exterior of said interior pipe, said one or more absorption pipes absorbing an external impact.

3. The impact absorbing device according to claim 1, wherein said exterior pipe bottom part includes a flange which projects towards the exterior of said exterior pipe, and said interior pipe upper part includes a flange which projects towards the exterior of said interior pipe, and said interior pipe movement component is arranged in a position on the exterior periphery of said exterior pipe and between said exterior pipe bottom part flange and said interior pipe upper part flange.

4. The impact absorbing device according to claim 1, wherein a material having elastic characteristics is used in at least one of said exterior pipe, said interior pipe and said one or more impact absorption pipes.

5. The impact absorbing device according to claim 1, wherein said support part includes a wire, and by releasing said wire to a fixed length, said first operation mode is activated, said support part moves and said second section faces said one or more holes by an energization power of said support part movement component, and by releasing all of said wire, said second operation mode is activated, said support part moves and said third section faces said one or more holes by an energization power of said support part movement component.

6. The impact absorbing device according to claim 5 further comprising:
a motor unit and a lock mechanism;
wherein said motor unit and said wire are connected in series, and when said wire is pulled a predetermined distance by said motor unit said wire becomes latched by said lock mechanism and said wire can be retracted by releasing said lock mechanism.

7. The impact absorbing device according to claim 6 further comprising:
a sensor device which detects the distance to an object and detects image data of an object; and
a controller which transmits an operation instruction to said motor unit and said lock mechanism based on data of said sensor device, said controller being electrically connected to said sensor device, said motor unit and said lock mechanism.

8. The impact absorbing device according to claim 1, wherein said interior pipe movement component and said support part movement component are both springs.

9. An automobile comprising:
an impact absorbing device according to claim 1.

10. An impact absorbing device comprising:
an exterior pipe having an exterior pipe bottom part, a first impact absorption part which absorbs external impacts, an exterior pipe upper part and an exterior pipe connection part which connects said first impact absorption part and said exterior pipe upper part, said exterior pipe connection part having a larger interior diameter than an interior diameter of said first impact absorption part, wherein an inner periphery wall of said exterior pipe upper part and a boundary surface between said exterior pipe connection part and said first impact absorption part are formed in a taper shape in a direction of said exterior pipe bottom part;
an interior pipe, said interior pipe having an interior pipe bottom part, said interior pipe bottom part having a flange which projects towards the interior, an interior pipe base part having one or more holes, an interior pipe upper part, a second impact absorption part which absorbs external impacts and having a smaller exterior diameter than an exterior diameter of said interior pipe base part, said second impact absorption part connecting said interior pipe base part and said interior pipe upper part, wherein said interior pipe is axially slidable in the interior of said exterior pipe;
an exterior pipe lid part having an opening arranged on said exterior pipe upper part, said exterior pipe lid part having a larger interior diameter than an exterior diameter of said interior pipe;
one or more first resistance bodies movably arranged in said one or more holes of said interior pipe respectively, said one or more first resistance bodies having a smaller exterior diameter than an interior diameter of said one or more holes respectively;
one or more second resistance bodies movably arranged between said second impact absorption part and said inner periphery wall of said exterior pipe upper part respectively, said one or more second resistance bodies enclosed by said exterior pipe lid part;
a support part movably arranged in said interior pipe, said support part having a support part upper part, said support part upper part having a flange which projects towards the interior, said support part also having a support part side wall surface having a first section, a second section and a third section formed in this order so that the distance between each section and an interior side wall surface of said interior pipe base part becomes smaller and in a first operation mode said second section faces said one or more holes and in a second operation mode said third section faces said one or more holes; and
a support part movement component arranged between said support part upper part flange and said interior pipe bottom part flange.

11. The impact absorbing device according to claim 10 further comprising:
one or more impact absorption pipes arranged axially in a position on the interior of said exterior pipe and the exterior of said interior pipe, said one or more absorption pipes absorbing an external impact.

12. The impact absorbing device according to claim 10, wherein said exterior pipe bottom part includes a flange which projects towards the exterior of said exterior pipe, and said interior pipe upper part includes a flange which projects towards the exterior of said interior pipe, and said interior pipe movement component is arranged in a position on the exterior periphery of said exterior pipe and between said exterior pipe bottom part flange and said interior pipe upper part flange.

13. The impact absorbing device according to claim 10, wherein a material having elastic characteristics is used in at least one of said exterior pipe, said interior pipe and said one or more impact absorption pipes.

14. An impact absorbing device comprising:
an exterior pipe having an exterior pipe bottom part, an exterior pipe impact absorption part which absorbs external impacts, an exterior pipe upper part and an exterior pipe connection part which connects said exterior pipe impact absorption part and said exterior pipe upper part, said exterior pipe connection part having a larger interior diameter than an interior diameter of said exterior pipe impact absorption part, wherein a boundary surface between said exterior pipe connection part and said exterior pipe impact absorption part is formed in a taper shape in a direction of said exterior pipe bottom part;
an interior pipe, said interior pipe having an interior pipe bottom part, said interior pipe bottom part having a flange which projects towards the interior, an interior pipe base part having one or more holes, an interior pipe impact absorption part which absorbs external impacts and having a smaller exterior diameter than an exterior diameter of said interior pipe base part, an interior pipe connection part having an even smaller exterior diameter than an exterior diameter of said interior pipe impact absorption part, said interior pipe connection part connecting said interior pipe base part and said interior pipe impact absorption part, and an interior pipe upper part connected to said interior pipe impact absorption part, wherein said interior pipe is axially slidable in the interior of said exterior pipe;
one or more movable resistance bodies arranged in said one or more holes of said interior pipe respectively, said one or more movable resistance bodies having a smaller exterior diameter than an interior diameter of said one or more holes respectively;
a support part movably arranged in said interior pipe, said support part having a support part upper part, said support part upper part having a flange which projects towards the interior, said support part also having a support part side wall surface having a first section, a second section and a third section formed in this order so that the distance between each section and an interior side wall surface of said interior pipe base part becomes smaller and in a first operation mode said second section faces said one or more holes and in a second operation mode said third section faces said one or more holes; and
a support part movement component arranged between said support part upper part flange and said interior pipe bottom part flange.

15. The impact absorbing device according to claim 14 further comprising:
one or more impact absorption pipes arranged axially in a position on the interior of said exterior pipe and the exterior of said interior pipe, said one or more absorption pipes absorbing an external impact.

16. The impact absorbing device according to claim 14, wherein a material having elastic characteristics is used in at least one of said exterior pipe, said interior pipe and said one or more impact absorption pipes.
